**Europäisches Patentamt**

**European Patent Office**

**Office européen des brevets**

(19)

(11) Veröffentlichungsnummer : **0 462 991 B1**

(12)

# EUROPÄISCHE PATENTSCHRIFT

(45) Veröffentlichungstag der Patentschrift :
**11.08.93 Patentblatt 93/32**

(51) Int. Cl.$^5$ : **F16D 3/72, B23K 15/00**

(21) Anmeldenummer : **90903822.6**

(22) Anmeldetag : **09.03.90**

(86) Internationale Anmeldenummer :
**PCT/EP90/00386**

(87) Internationale Veröffentlichungsnummer :
**WO 90/10801 20.09.90 Gazette 90/22**

(54) **BIEGEELASTISCHES KUPPLUNGSELEMENT UND VERFAHREN ZU DESSEN HERSTELLUNG.**

(30) Priorität : **10.03.89 DE 3907855**

(43) Veröffentlichungstag der Anmeldung :
**02.01.92 Patentblatt 92/01**

(45) Bekanntmachung des Hinweises auf die
Patenterteilung :
**11.08.93 Patentblatt 93/32**

(84) Benannte Vertragsstaaten :
**CH DE FR GB IT LI NL SE**

(56) Entgegenhaltungen :
**EP-A- 0 026 681**
**EP-A- 0 211 090**
**US-A- 3 959 988**

(73) Patentinhaber : **BHS-Bayerische Berg-,
Hütten- und Salzwerke Aktiengesellschaft
Nymphenburger Strasse 37
W-8000 München 2 (DE)**

(72) Erfinder : **HEIDRICH, Guenther
Ortwang
W-8978 Burgberg (DE)**
Erfinder : **MÜLLER, Siegfried
Georg-Queri-Strasse 39
W-8960 Kempten (DE)**

(74) Vertreter : **Weickmann, Heinrich, Dipl.-Ing. et
al
Patentanwälte H.Weickmann, Dr. K.Fincke
F.A. Weickmann, B. Huber Dr. H. Liska, Dr. J.
Prechtel Kopernikusstrasse 9 Postfach 86 08
20
W-8000 München 86 (DE)**

EP 0 462 991 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein biegeelastisches Kupplungselement bestehend aus zwei in ihrem radial äußeren Umfangsbereich miteinander verbundenen Membranscheiben und mindestens einem an dem radial inneren Umfang einer dieser Membranscheiben angeschweißten Anschlußteil.

Ein solches Kupplungselement ist aus der EP-A-211 090 bekannt.

Der Erfindung liegt die Aufgabe zugrunde, bei einem solchen Kupplungselement dafür zu sorgen, daß der Spannungsverlauf innerhalb des Kupplungselements, insbesondere bei ziehend angreifenden Axialkräften und Winkelauslenkungen infolge von Radial- und Winkelversatz anschließender Wellen günstiger wird.

Zur Lösung dieser Aufgabe wird erfindungsgemäß vorgeschlagen, daß im radial inneren Umfangsbereich gelegene, radial einwärts gerichtete Umfangsflächen des Anschlußteils und der zugehörigen Membranscheibe bündig aneinander anschließen und daß die radial äußere Verbindungszone der Membranscheiben und die radial innere Verbindungszone des Anschlußteils undder zugehörigen Membranscheibe radial derart elastisch sind, daß bei einer Membranscheibendeformation durch Vergrößerung des axialen Abstands der Membranscheiben in ihren radial inneren Umfangsbereichen eine elastische Durchmesserverkleinerung $\Delta R$ der radial äußeren Verbindungszone und eine elastische Durchmesservergrößerung $\Delta r$ der radial inneren Verbindungszone eintreten kann.

Für einen günstigen Spannungsverlauf ist es weiterhin von Vorteil, wenn im radial inneren Umfangsbereich gelegene, radial auswärts gerichtete Umfangsflächen des Anschlußteils und der zugehörigen Membranscheibe bündig aneinander anschließen.

Der Grundgedanke der Erfindung ist insbesondere anwendbar, wenn an jeder Membranscheibe im radial inneren Umfangsbereich je eine hülsenförmiges Anschlußteil anschließt, wobei diese Anschlußteile voneinander weg gerichtet sind. Dabei können die Anschlußteile an ihren voneinander abgelegenen Enden jeweils einen radial auswärts gerichteten Radialflansch, insbesondere Schraubflansch, aufweisen.

Im Hinblick auf unterschiedliche Einbauverhältnisse wird empfohlen, daß die Radialflansche unterschiedliche axiale Abstände von der jeweils zugehörigen Membranscheibe besitzen. Damit wird insbesondere die Möglichkeit geschaffen, daß der eine in kürzerem axialen Abstand von der zugehörigen Membranscheibe angeordnete Radialflansch einen solchen Axialabstand von der zugehörigen Membranscheibe besitzt, daß beim Anbringen von Verschraubungen Verschraubungsmuttern zwischen diesen Radialflansch und die zugehörige Membranscheibe eingebracht werden können und daß der andere, in größerem axialem Abstand von der zugehörigen Membranscheibe angeordnete Radialflansch einen solchen Axialabstand von der zugehörigen Membranscheibe besitzt, daß beim Anbringen von Verschraubungen Schraubbolzen zwischen diesen Radialflansch und die zugehörige Membranscheibe eingebracht werden können.

Eine Möglichkeit, um die Eigenfrequenz des Kupplungselements auf einen gewünschten Wert hin zu trimmen, besteht darin, daß zwischen den beiden Membranscheiben zumindest in dem radial äußeren Umfangsbereich des zwischen ihnen eingeschlossenen Scheibenraums eine Füllmasse, insbesondere aus elastomerem Werkstoff, eingebaut ist.

Die erfindungsgemäßen Kupplungselemente eignen sich insbesondere für die drehstarre Übertragung hoher Drehmomente bei gleichzeitig höchsten Drehzahlen und erfüllen eine Ausgleichsfunktion bei Axial-, Radial- und Winkelversatz zweier gekuppelter Wellen durch elastische Deformation.

Die Erfindung betrifft weiter ein Verfahren zur Herstellung eines biegeelastischen Kupplungselements, welches aus zwei in ihrem radial äußeren Umfangsbereich miteinander verbundenen Membranscheiben und mindestens einem an den radial inneren Umfang einer dieser Membranscheiben angeschweißten Anschlußteil besteht, wobei man das Anschlußteil und die genannte eine Membranscheibe im Schweißstoßbereich mit zur gegenseitigen Anlage bestimmten entgegengesetzt radial gerichteten Zentrierflächen und mit zur gegenseitigen Anlage bestimmten, entgegengesetzt axial gerichteten Kontaktflächen ausbildet derart, daß die beiden Teile, nämlich das Anschlußteil und die genannte eine Membranscheibe in eine zentrierte und axial festgelegte Relativlage zusammengesteckt werden können, woei die Kontaktflächen radial auswärts an die Zentrierflächen anschließen und von radial außen her für eine Elektronenstrahlschweißung zugänglich sind, und wobei man nach dem Zusammenstecken im Kontaktbereich der Kontaktflächen von radial außen her eine Elektronenstrahlschweißnaht oder Laserschweißnaht erzeugt.

Ein solches Verfahren ist aus der EP-A-0 211 090 A1 ebenfalls bekannt. Dabei verbleibt nach dem Zusammenschweißen im Bereich der Kontakt- bzw. Gegenkontaktfläche der radial innerste Bereich des Anschlußteils innerhalb der zugehörigen Membranscheibe. Damit beruht die Verbindung zwischen der Membranscheibe und dem Anschlußteil zum einen auf der Verschweißung der Kontaktflächen und zum anderen auf der gegenseitigen Anlage der Zentrierflächen. Der Spannungsverlauf bei Biegebelastung ist undefiniert, dies umso mehr, als bei dem bekannten Verfahren keine Vorschrift hinsichtlich der Tiefe der Elektronenstrahlschweißnaht besteht. Überdies stellt der innerhalb der Membranscheibe liegende Teil des Anschlußteils eine zusätzliche Masse dar, der zur Drehmomentübertragung nichts beiträgt.

Der Erfindung liegt deshalb weiter die Aufgabe zugrunde, das oben genannte Verfahren dahin zu modifizieren, daß sich ein günstigerer und technisch leichter zu beherrschender Spannungsverlauf ohne Verringerung der Torsionsbelastbarkeit ergibt.

Zur Lösung dieser Aufgabe wird erfindungsgemäß vorgeschlagen, daß man die Elektronenstrahlschweißnaht bzw. Laserschweißnaht radial einwärts bis mindestens zu den Zentrierflächen erstreckt, und daß man anschließend mindestens das radial einwärts der Zentrierflächen liegende Material des einen bzw. anderen Teils abträgt.

Bei der erfindungsgemäßen Verfahrensweise erreicht man, daß die im radial inneren Umfangsbereich gelegene radial einwärts gerichteten Umfangsflächen des Anschlußteils und der zugehörigen Membranscheibe bündig aneinander anschließen. Damit erhält man ein quasi-monolithisches Kupplungselement mit günstiger und rechnerisch leicht zu erfassender Spannungsverteilung am Übergang zwischen der jeweiligen Membranscheibe und dem zugehörigen Anschlußteil. In der Verbindung zwischen dieser Membranscheibe und dem Anschlußteil tritt keine sprunghafte Änderung der Spannungsverhältnisse bei Biege- und Torsionsbelastungen ein.

Vorzugsweise läßt man dann die Elektronenstrahlschweißnaht bzw. Laserschweißnaht radial einwärts über die Zentrierflächen hinaus in das Material des jeweiligen Teils eindringen. Damit erreicht man, daß man mit einem Minimum von Materialabtragung sicherstellt, daß die Schweißnaht auch an ihrem radial inneren Ende lunkerfrei ist.

Die Bereitstellung der bei der Montage zusammentretenden Zentrier- und Kontaktflächen kann in der Weise geschehen, daß man das Anschlußteil mit einer nach radial auswärts und axial zu der zugehörigen Membranscheibe hin offenen, die anschlußteilseitige Kontaktfläche und die anschlußteilseitige Zentrierfläche bildenden Ringausnehmung versieht, welche nach radial einwärts durch einen in eine Bohrung der genannten Membranscheibe einsteckbaren Ringvorsprung begrenzt ist, und daß man von dem Anschlußteil nach dem Schweißen über die radiale Höhe des Ringvorsprungs von innen Material abträgt.

Die beiden Membranscheiben können auch in radial äußeren Membranbereichen miteinander durch Elektronenstrahl- oder Laserschweißung miteinander verschweißt werden, etwa so, wie in der europäischen Offenlegungsschrift 211 090 beschrieben.

Eine bevorzugte Herstellungsweise besteht darin, daß man die Membranscheiben an ihrem radial äußeren Umfang mit einer die Herstellung der Membranscheiben insbesondere auf Drehmaschinen erleichternden Materialstärke herstellt und nach dem Verschweißen der Membranscheiben die Materialstärke im radial äußeren Bereich der Membranscheiben in einem die dortige Biegeweichheit vergrößernden Masse durch Materialabtragung, insbesondere auf einer Drehmaschine, reduziert. Man erleichtert auf diese Weise zum einen die Herstellung der Membranscheiben und das Verschweißen. Der durch das Verschweißen gewonnene Kupplungselementrohling kann dann als ganzer leicht eingespannt und der Materialabtragung unterworfen werden, die zu seiner endgültigen Form und Biegeweichheit führt. Dabei kann man den Außendurchmesser der Membranscheibe reduzieren und dort einen etwaigen Überstand der radial äußeren Schweißnaht im Hinblick auf Auswuchtung beseitigen. Weiter ist es möglich, daß man den Übergang der jeweiligen Außenumfangsfläche einer Membranscheibe zu der von der jeweils anderen Membranscheibe abgelegenen Stirnfläche der jeweiligen Membranscheibe an mindestens einer Membranscheibe abschrägt. Auf diese Weise können auch an dieser Stelle Unstetigkeiten des Spannungsverlaufs bei Biegebelastungen vermieden werden.

Aus einspannungstechnischen Gründen empfiehlt es sich, daß man eine Verschweißung der beiden Membranscheiben vornimmt, bevor die Verschweißung mit dem Anschlußteil erfolgt.

Um nach dem Verschweißen der Membranscheiben einen hohen Kontaktdruck zwischen den Kontaktflächen zu erhalten, wenn man das bzw. die Anschlußteile anschweißt, wird vorgeschlasen, daß man die Verschweißung der jeweils einen Membranscheibe mit dem zugehörigen Anschlußteil und insbesondere die Verschweißung der beiden Membranscheiben mit jeweils einem Anschlußteil unter Anpressung des jeweiligen Anschlußteils an die jeweilige Membranscheibe vornimmt, während man die beiden Membranscheiben an ihrem radial inneren Umfang gegeneinander durch Distanzstücke abstützt, und daß man diese Distanzstücke nach dem Anschweißen des Anschlußteils bzw. der Anschlußteile entnimmt.

Um in dem Bereich des Kupplungselements eine Fluchtsicherung und/ oder ein Zusatzlager und/oder eine Radial-Begrenzung und/oder eine Axialbegrenzung zu schaffen, kann man so vorgehen, daß man nach dem Verbinden der Membranscheiben an ihrem radial äußeren Umfang und nach dem Anschließen eines Anschlußteils an mindestens eine der Membranscheiben in die eine Membranscheibe und/oder in deren zugehörigen Anschlußteil eine Überbrückungshülse einbaut, welche den Spalt zwischen den beiden Membranscheiben überbrückt und dem Innenumfang der anderen Membranscheibe und/oder dem Innenumfang des dieser letzteren zugehörigen Anschlußteils mit Abstand gegenüberliegt.

Nach einer bevorzugten Durchführungsform des Verfahrens geht man in der Weise vor, daß man ein Kupplungselement mit je einem Anschlußteil an beiden Membranscheiben herstellt, wobei jedes dieser Anschlußteile aus einer axial gerichteten Anschlußhülse und einem am membranscheibenfernen Ende der Anschlußhülse radial auswärts gerichteten Anschlußflansch, insbesondere Verschraubungsflansch, besteht. Das nach dieser Verfahrensweise hergestellte Kupplungselement ist vielseitig verwendbar, und zwar bei den verschiedensten Wellenkonstruktionen zwischen aneinander anschließenden Teilen einer Maschinenanlage.

Die vielseitige Verwendbarkeit kann noch dadurch erhöht werden, daß man von den beiden Anschlußelementen das eine Anschlußelement mit kleinstmöglichem Flanschabstand herstellt, der den Einbau einer Mutter auf einem zu der jeweiligen Membranscheibe hin axial eingeführten Schraubbolzen gestattet, und daß man das andere Anschlußelement mit einem Flanschabstand von der zugehörigen Membranscheibe ausführt, welcher das Einsetzen eines Schraubbolzens in axialer Richtung von dem Ringraum zwischen dem jeweiligen Flansch und der jeweiligen Membranscheibe her gestattet.

Wenn man unter Zugrundelegung gleichen Membranscheibenaußendurchmessers Kupplungselemente mit unterschiedlichem Membranscheibeninnendurchmesser herstellt, so hat man die Möglichkeit, bei der Ausführungsform mit größerem Membranscheibendurchmesser etwaige Anschlußnaben innerhalb des Kupplungselements aufzunehmen und bei der Ausführungsform mit kleinerem Membranscheibeninnerdurchmesser die Anschlußnaben von dem Kupplungselement axial abstehen zu lassen. Wendet man dieses Prinzip für verschiedene Membranscheibenaußendurchmesser an, so kann man ohne insgesamt große Lagerhaltung einen Satz von Kupplungselementen bereitstellen, der für die meisten in Frage kommenden Einsatzsituationen jeweils das richtige Kupplungselement liefert.

Die beiliegenden Figuren erläutern die Erfindung anhand von Ausführungsbeispielen. Es stellen dar:

Figur 1 einen Längsschnitt (Halbschnitt) durch ein erfindungsgemäßes Kupplungselement, nämlich ein Standardelement im fertigen und eingebauten Zustand;

Figur 2 das Kupplungselement gemäß Figur 1 beim Zusammenbau;

Figur 2a ein Detail zu Figur 2 in Explosionsdarstellung;

Figur 3 einen Ausschnitt aus dem äußeren Membranbereich des Kupplungselements;

Figur 4 einen Ausschnitt aus dem Kupplungselement einmal im unbelasteten und einmal im belasteten Zustand;

Figur 5 eine Wellenanordnung mit erfindungsgemäßen Kupplungselementen und seitlich angeordneten Wellennaben;

Figur 6 eine Wellenanordnung mit erfindungsgemäßen Kupplungselementen und in diese eingesteckten Wellennaben (Kurzbauart);

Figur 7 eine Wellenanordnung unter Verwendung erfindungsgemäßer Kupplungselemente bei zusätzlichem Vorhandensein axialer Spielbegrenzungsmittel;

Figur 8 eine der Kurzbauform gemäß Figur 6 entsprechende Ausführungsform bei Vorhandensein axialer Spielbegrenzungsmittel;

Figur 9 eine der Figur 5 ähnliche Ausführungsform bei Vorhandensein einer Notauslauf-Vorrichtung;

Figur 10 eine der Figur 6 ähnliche Ausführungsform bei Vorhandensein einer Notauslauf-Vorrichtung;

Figur 11 eine der Figur 5 ähnliche Ausführungsform mit innerer Zusatzlagerung;

Figur 12 eine an Figur 6 anschließende Ausführungsform mit jeweils zwei Kupplungselementen in Tandembauart an beiden Enden;

Figur 13 die Ausführungsform nach Figur 1 mit radial starren Doppelmembranen für die Zeit der Auswuchtung;

Figur 14 ein Kupplungselement entsprechend Figur 1 mit Elastomer-Werkstoff im Innern der Doppelmembran;

Figur 15 einen Längsschnitt (Halbschnitt) einer Spannvorrichtung für die Außenschweißung der Doppelmembranen;

Figur 16 eine Spannvorrichtung für die Innenschweißung der Kupplungselemente;

Figur 17 eine Gegenüberstellung von außendurchmessergleichen Kupplungselementen mit unterschiedlichem Innendurchmesser und unterschiedlichem Anbau von Wellennaben.

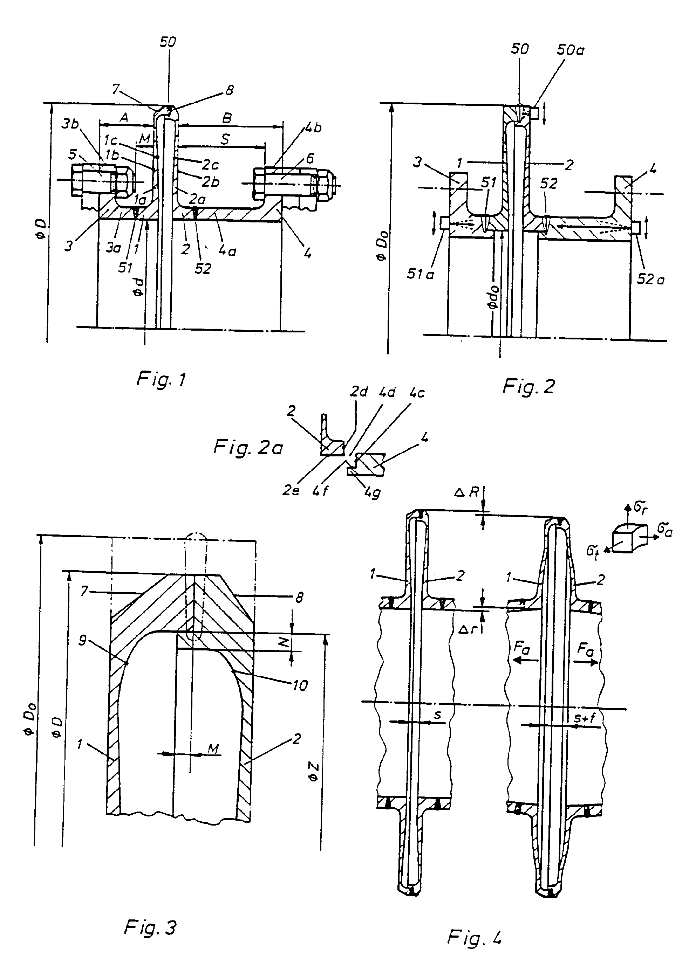

Die Figur 1 zeigt das Standardelement gemäß der Erfindung im fertig eingebauten Zustand.

Dieses Kunplungselement besteht aus Membranscheiben 1, 2 und Anschlußteilen 3, 4. Die Membranscheiben 1, 2 und die Anschlußteile 3, 4 sind an den Stellen 50, 51 und 52 mittels Elektronenstrahlschweißung verbunden. Die Anschlußteile 3, 4 bestehen aus jeweils einer dünnwandigen Hülse 3a bzw. 4a mit angewachsenem Flansch 3b bzw. 4b. Die Drehmomentübertragung erfolgt an den Flanschen 3b bzw. 4b mittels der Schrauben 5, 6, welche die Verbindung zu Anschlußflanschen einer Wellenanordnung herstellen.

Die Abstände A, B der Flansche 3b, 4b zu den Membranscheiben 1, 2 sind unterschiedlich groß und mit Rücksicht auf die Schrauben- und Muttermontage minimiert. So bestimmt der für die Mutermontage der Schraube 5 erforderliche Zwischenraum M den Minimalabstand A und für die Schraubenmontage der Schraube 6 der Zwischenraum S den Minimalabstand B.

Die Membranscheiben 1, 2 sind nach dem Elektronenstrahlschweißen außen auf den Durchmesser D abgedreht und mit Abschrägungen 7, 8 versehen.

Des weiteren sind die Anschlußteile 3, 4 ebenfalls nach dem Elektronenstrahlschweißen innen auf die vom übertragbaren Drehmoment abhängigen, gleich großen Durchmesser d ausgedreht, die dem Innendurchmesser der Menbranscheiben 1, 2 entsprechen.

Der flexible Scheibenbereich 1a, 2a der Membranscheiben 1, 2 wird gebildet aus jeweils einer planen Stirnfläche 1b, 2b und einer nach außen hin konisch verlaufenden Stirnfläche 1c, 2c. Die Stirnflächen 1b, 2b erleichtern die Herstellung der Membranscheiben 1, 2, indem diese als Stützflächen beim Herstellen der dünnwandigen Bereiche 1a, 2a verwendet werden.

Die Figur 2 zeigt den Zustand des Standardelementes während der Herstellung. Die nachgearbeiteten Durchmesser D, d (Figur 1) verhalten sich zu den ursprünglichen Durchmessern $D_o$, $d_o$ (Figur 2) wie folgt:

$$D < D_o \text{ und } d > d_o.$$

In Figur 2a erkennt man den radial inneren Bereich der Membranscheibe 2 und den zugehörigen Anschlußbereich des Anschlußelements 4. An dem Anschlußelement 4 ist eine Ringausnehmung 4d angebracht, welche eine Kontaktfläche 4c und eine radial auswärts gerichtete Zentrierfläche 4f bildet. Die Ringausnehmung 4d ist durch einen Ringvorsprung 4g definiert. An der Membranscheibe 2 ist eine Kontaktfläche 2d und eine radial einwärts gerichtete Zentrierfläche 2e angebracht. Beim Zusammenbau der Einheit gemäß Figur 2 werden zunächst die Membranscheiben 1 und 2 zusammengesetzt und bei 50 miteinander verschweißt. Dann werden die Anschlußteile 3 und 4 angesetzt, so daß die Kontaktflächen 2d und 4 cin gegenseitige Anlage kommen und auch die Zentrierflächen 4f und 2e in gegenseitige Anlage kommen. Dann werden die Schweißnähte bei 51 und 52 gebildet. Schließlich wird das so gebildete Rohkupplungselement nachgedreht, indem der Innendurchmesser auf das Maß d (Figur 1) ausgedreht wird und indem weiter am Außendurchmesser vom Maß $D_o$ auf das Maß D abgedreht wird und gleichzeitig die Schrägflächen 7, 8 angedreht werden. Weiter zeigt die Figur 2 die prüfgerechte Gestaltung der Schweißverbindungen 50, 51, 52 bezüglich der Ultraschallprüfung. Durch dieses Verfahren können insbesondere innere Schweißfehler nachgewiesen werden, was für derartige Hochleistungskupplungen von größter Bedeutung ist. Man erkennt, wie mittels üblicher Prüfköpfe 50a, 51a, 52a eine 100prozentige Durchstrahlung der Schweißquerschnitte sowohl vor als auch nach der Endbearbeitung an den Membranscheiben und Anschlußteilen möglich ist. Damit ist gewährleistet, daß das Kupplungselement auch bei Inspektionen nach Betriebszeiten auf Rißfreiheit geprüft werden kann.

Oberflächenrisse können auch durch das einfachere Farbeindringverfahren festgestellt werden. Durch die Zugänglichkeit zu den nachgearbeiteten Innenflächen der Hülsen 3a und 4a und Membranscheiben 1 und 2 können die beiden inneren Schweißungen auch von innen aus auf Oberflächenrisse geprüft werden.

Die Figur 3 zeigt die Ausbildung des äußeren Randbereiches der Membranscheiben 1, 2 nach Figur 1. Die Minimierung des Querschnittes in bezug auf hohe Gestaltfestigkeit und große radiale Elastizität erfolgt durch eine besondere Geometrie, nämlich die beidseitigen Abschrägungen 7, 8, die parabelförmigen Übergangskonturen 9, 10 und den stufenlosen Übergang vom Zentrierdurchmesser Z in die Übergangskontur 9. Die Zentrierbundmaße M und N sind mit Rücksicht auf die Elektronenstrahlschweißung und die Zentrierbarkeit minimiert.

Auch im Wurzelbereich der Membranscheiben 1 und 2 sind Übergangskonturen zwischen den Stirnflächen 1b und 2b und den zylindrischen Außenumfangsflächen vorgesenen, die der Ausschaltung von Kerbwirkungen dienen. Diese Übergangskonturen können ähnlich parabolisch geformt sein, wie bei 9 und 10 dargestellt. Zu den Abschrägungen 7 und 8 ist noch folgendes nachzutragen: Diese Abschrägungen 7 und 8 könnten bei nachträglichen Schweißnahtprüfungen mittels des Prüfkopfes 50a zu Ergebnisverfälschungen führen. Es wird deshalb nach einer weiteren Ausführungsform vorgesehen, daß die Schrägfläche 8 entfällt und daß die Schrägfläche 7 steiler gestaltet ist, d. h. mit einer achsnormalen Ebene einen kleineren Winkel einschließt und in die Fläche 1b radial innerhalb des Durchmessers Z einmündet.

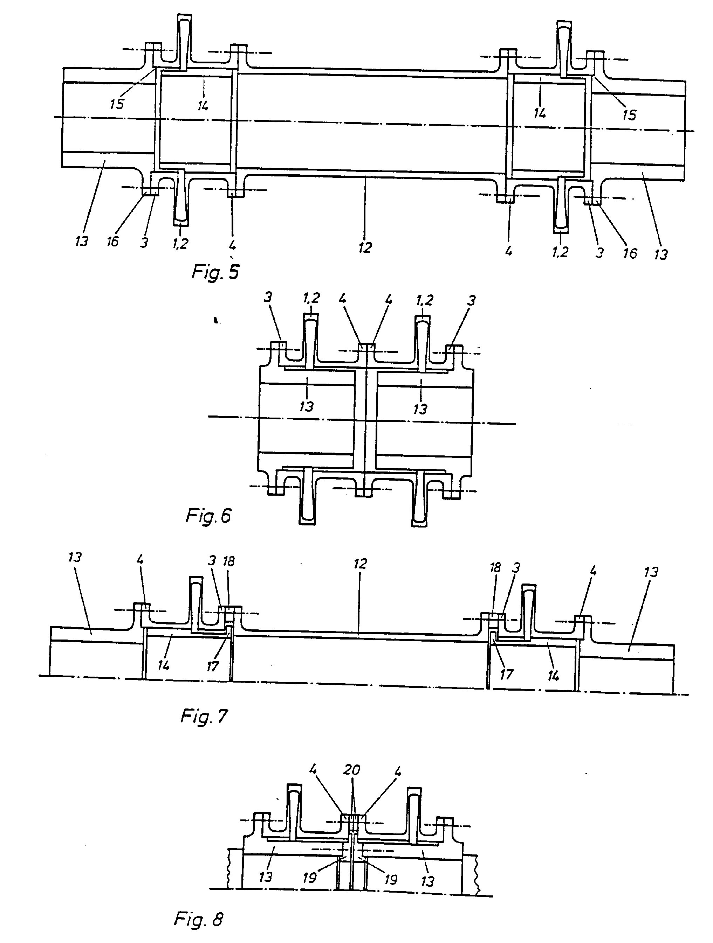

Die Figur 4 erklärt die Wirkung der radialen Elastizität der radial inneren und radial äußeren Querschnitte bei axialer Verformung. Das linke Bild zeigt einen Ausschnitt aus der Doppelmembran im unbelasteten Zustand, das rechte Bild den gleichen Ausschnitt unter ziehend angreifenden Axialkräften $F_a$. Der Abstand s vergrößert sich um den Federweg f. Durch die dabei entstehende Auswölbung bilden sich in der elastischen Membranfläche die Spannungen $\sigma_r$, $\sigma_a$, $\sigma_t$ (r bedeutet: radial, a bedeutet: axial, t bedeutet: tangential), deren Wirkungsrichtungen an einem Flächenteilchen dargestellt sind. Sind nun die inneren und äußeren Randbereiche der Doppelmembran radial elastisch, so können sich die inneren Durchmesser um $\Delta r$ vergrößern und die äußeren Durchmesser um $\Delta R$ verkleinern, was in einem sehr hohen Maße die Membranspannungen $\sigma$ reduziert. Die große Wirkung dieser Maßnahmen wurde mehrfach anhand von Spannungsmessungen mittels Dehnmeßstreifen nachgewiesen. Der gleiche Effekt tritt auch auf, wenn die Membranen Verformungen durch Winkelauslenkung bei Radial- und Winkelversatz der Wellen ausgesetzt sind. Die Herstellung der endgültigen Kontur der radial inneren und radial äußeren Randbereiche erst nach dem Schweißen ergibt zudem Vorteile bei dem Anfertigen der dünnwandigen Flächenbereiche 1a und 2a. Die vor dem Schweißen vorhandenen massiven Randbereiche erleichtern nämlich diesen Fertigungsprozeß insbesondere durch bessere Werkstückeinspannung, geringere Verzugs- und Vibrationsanfälligkeit und leichteres Erreichen einer hohen Oberflächengüte.

Die Figur 5 zeigt eine Wellenanordnung, gebildet aus zwei Kupplungselementen nach Figur 1, einer Zwischenhülse 12 und zwei seitlich an die jeweiligen Teile 3 angeflanschten Naben 13. Im Inneren der Anschlußteile 4 ist jeweils ein separater, ringförmiger Einsatz 14 so angeordnet, daß sein eines Ende mit radialem Spiel in das jeweilige Teil 3 hineinreicht. Dies stellt eine Sicherheitsmaßnahme dar, die verhindert, daß bei einem evtl. Gewaltbruch der Membranen einzelne Bauteile aus der Kupplung sich lösen können. Über die Zwischenhülse 12 kann die Wellenlänge an die jeweilige Einbausituation angepaßt werden. Um die beiden Kupplungselemente einschließlich der Zwischenhülse 12 im montierten Zustand ein- oder ausbauen zu können, ist es für diese Arbeit zeitweise notwendig, die Wellenlängs um die Länge der beiden Zentrierbunde 15 zu verkleinern. Die Doppelmembranen ermöglichen diese Verkleinerung, indem unter Zuhilfenahme einfacher Mittel die beiden Membranscheiben jeweils zusammengedrückt werden.

Bis auf den Flansch 16 können die Naben 13 unterschiedlich ausgeführt werden, so daß alle vorkommenden Arten von Welle/Nabe-Verbindungen möglich sind. Sollte es nicht möglich sein, den Nabenflansch 16 an den Flansch 3b des Anschlußteils 3 anzupassen, dann kann mit Hilfe eines Zwischenflansches eine Angleichung vorgenommen werden, wobei die Kupplungselemente unverändert bleiben können.

Die Figur 6 zeigt eine Kurzbauart einer Wellenverbindung nach der Erfindung. Die Auslegung des Kupplungselements nach Figur 1 erlaubt es, die Wellennabe 13 bei gleichbleibendem Wellendurchmesser auch im Innern des jeweiligen Kupplungselements anzuordnen. Die innen angeordneten Naben 13 erfüllen zugleich auch die Sicherheitsfunktion des Einsatzes 14 der Figur 5 im Falle eines Membranschadens.

Durch die lösbare Verbindung der beiden Kupplungselemente an den Flanschen ist es möglich, die gekuppelten Maschinen einzeln auszubauen, ohne sie axial verschieben zu müssen.

Die Figur 7 zeigt eine Wellenhälfte mit Kupplungselementen der Erfindung, die in der Lage ist, äußere Axialkräfte wechselweise zu übertragen. Die Membranscheiben werden dabei durch diese Axialkräfte nicht belastet.

Der Einsatz 14 besitzt für diese Funktion einen Flansch 17, der im Bereich einer Zwischenscheibe 18 eingreift. Die Überleitung einer Axialkraft erfolgt beispielsweise von der Nabe 13 über die Teile 4 und 14 sowie über den Flansch 17 in die Zwischenhülse 12. Der Flansch 17 ist winkelbeweglich mit kleinem axialem Spiel in dem durch die Zwischenscheibe 18 gebildeten Raum angeordnet. Die Winkelbeweglichkeit der Doppelmembran bleibt auch bei dieser Bauart erhalten.

Die Figur 8 zeigt eine Wellenverbindung mit gleicher Funktion wie in Figur 7, jedoch in Kurzbauweise gemäß Figur 6. Für die Übertragung einer Axialkraft sind Flansche 19 an den Naben 13 befestigt. Zwei Zwischenscheiben 20 ergeben einen Raum für die Flansche 19. Durch die Anordnung der Zwischenscheiben 20 bleibt der leichte Ein- und Ausbau der Maschinen samt Kupplungselementen ohne axiale Verschiebung erhalten.

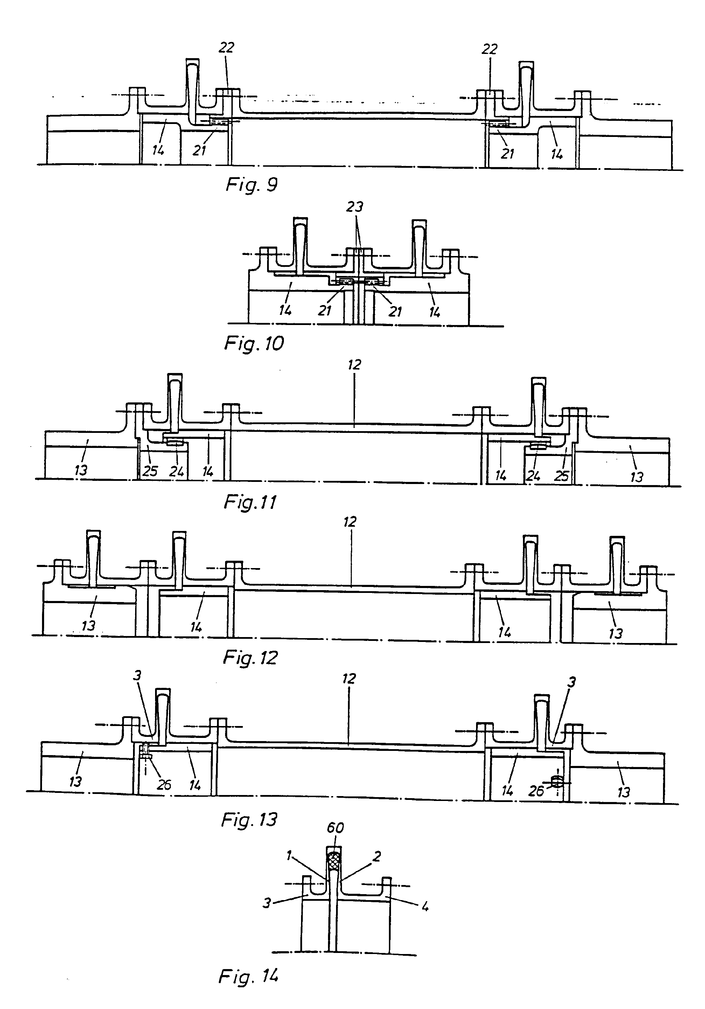

Die Figur 9 zeigt eine Wellenverbindung mit Kupplungselementen nach der Erfindung, bei der als zusätzliche Funktion ein "Notauslauf" nach Membranbruch vorgesehen ist. Zu diesem Zweck besitzt der Einsatz 14 eine Verzahnung 21, die mit vergrößertem Flankenspiel in eine Verzahnung einer Zwischenscheibe 22 eingreift. Das vergrößerte Flankenspiel verhindert im Normalfall die Drehmomentübertragung durch Flankenkontakt. Im Falle eines Schadens erfolgt kurzzeitig über diese Verzahnungspaarung die Übertragung des Drehmomentes.

Die Figur 10 zeigt eine Wellenverbindung mit gleicher Funktion wie bei Figur 9, jedoch in Kurzbauweise gemäß Figur 6. Die Anordnung von zwei Zwischenscheiben 23 dient wiederum dem einfachen Ein- und Ausbau der Maschinen samt Kupplungshälften ohne axiales Verschieben. Auch in der Ausführungsform nach Figur 10 sind die Zahnkupplungen 21 zwischen den Einsätzen 14 einerseits und den Zwischenscheiben 23 andererseits angeordnet, wie in Figur 9 dargestellt und beschrieben.

Die Figur 11 zeigt eine Wellenverbindungshälfte mit Kupplungselementen nach der Erfindung, bei der zusätzlich für den Fall langer, schwerer Zwischenhülsen 12 eine Gewichtsentlastung der Membranscheiben durch winkelbewegliche Radiallager 24 jeweils im Bereich der Mittelebenen der Doppelmembranen vorgesehen ist. Die Zwischenhülse 12 wird über die Radiallager 24 und Flansche 25 direkt an der jeweiligen Wellennabe 13 gewichtsmäßig abgestützt. Um die Elastizität der Doppelmembranen nicht zu behindern, ist eine axiale Beweglichkeit zwischen den Einsätzen 14 und den Radiallagern 24 vorgesehen.

Die Figur 12 zeigt eine Wellenverbindung mit Kupplungselementen nach der Erfindung, bei der zur Vergrößerung der axialen Elastizität jeweils zwei Kupplungselemente hintereinander tandemartig angeordnet sind. Dabei kann das unmittelbar an der Nabe 13 angebrachte Kupplungselement durch radiale Abstützung an der Nabe 13 winkelstarr angeordnet werden, ohne daß die Vergrößerung der axialen Elastizität in Frage gestellt wird.

Die Figur 13 zeigt eine Wellenverbindung mit Kupplungselementen nach der Erfindung im Zustand während einer Komplettauswuchtung.

Vor dem Einsetzen der Wellenanordnung der Figur 13 in eine Wuchtmaschine wird diese Anordnung in einen Ausrichtbock eingesetzt und mittels der Schrauben 26 ausgerichtet; die Ausrichtung kann dann jeweils durch Rundlaufprüfgeräte geprüft werden. Dann ist ein einwandfreier Rundlauf der Wellenanordnung gewährleistet, wenn diese mit ihren Naben 13 in Rollenlagern der Auswuchtmaschine eingesetzt wird. In dem durch die Einstellung der Schrauben 26 starr verspannten Zustand kann die Wellenverbindung problemlos dynamisch ausgewuchtet werden. Die verspannte Kupplung entspricht genau dem Einbauzustand, der sich ergibt, wenn die zu kuppelnden Maschinen zueinander fehlerfrei ausgerichtet sind (Nullausrichtung). Somit ist die durch die Erfindung ermöglichte Auswuchtung weitgehend identisch mit einer Betriebsauswuchtung und garantiert ein Höchstmaß an Laufpräzision bei höchsten Drehzahlen.

Für die zeitweise Anbringung der Schrauben 26 sind in den Einsätzen 14 oder auch in den gegenüberliegenden Hülsen der Anschlußteile 3 radiale Gewindelöcher vorgesehen.

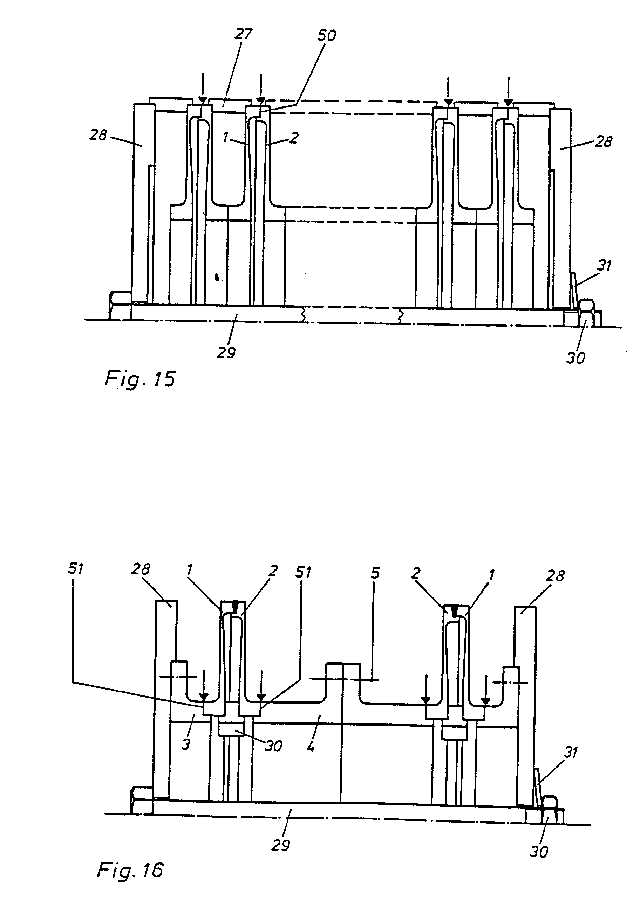

Die Figur 14 zeigt eine Membrankupplungshälfte bestehend aus zwei Membranscheiben 1, 2 und den Anschlußteilen 3, 4 mit näheren Einzelheiten etwa entsprechend Figur 1. Dabei ist im Inneren der Doppelmembran 1, 2 ein Elastomer-Werkstoff unter Bildung einer Gummi-Metallverbindung einvulkanisiert.

Elastomere sind in der Lage zu federn, zu dämpfen und zu dämmen. Durch den Elastomer-werkstoff 60 kann demnach die axiale und winklige Steifigkeit der Doppelmembran 1, 2 auch nachträglich verändert werden, was wiederum die Eigenfrequenz der Kupplung beeinflußt. Somit ist es möglich, Resonanzdrehzahlen so zu verlegen, daß die Betriebssicherheit der Gesamtanlage nicht in Gefahr gerät. Das vorhandene Dämpfungsvermögen des Elastomer-Werkstoffes wirkt schonend auf die angeschlossenen Aggregate, vor allem in Resonanzbereichen. Dies erhöht die Lebensdauer der gesamten Anlage. Die Größe von Steifigkeit und Dämpfung ist variierbar durch den Füllungsgrad (Masse des eingebauten Elastomer-Werkstoffs) und die Shore-Härte des Elastomer-Werkstoffes. Die Masse und das Massenmoment der Gesamtkupplung wird dabei infolge des niedrigen spezifischen Elastomergewichtes nur geringfügig vergrößert. Die zudem noch vorhandene Dämmeigenschaft verringert auch die Körperschallübertragung und wirkt somit geräuschreduzierend.

Die Vulkanisation erfolgt bei Rotation und unter Verwendung moderner Bindesysteme. Dabei ist je nach Art des Elastomer-Werkstoffes dessen unmittelbare Verbindung mit dem Metall zu erreichen oder es werden geeignete Klebstoffe vorher auf dem Metall aufgetragen. Durch die Rotation wird der zunächst flüssige Elastomer-Werkstoff im Schleuderverfahren verteilt. Das Schleudern muß dabei solange aufrechterhalten werden, bis der Werkstoff durch die fortschreitende Vulkanisation ausreichend verfestigt ist, um seine Verteilung beizubehalten.

Die Figur 15 zeigt eine Spannvorrichtung für die vorteilhafterweise zuerst auszuführenden Außenschweißungen 50 an mehreren Doppelmembranen 1, 2. Das notwendige Verspannen der Membranen 1, 2 erfolgt durch gleiche, einteilige Abstandsringe 27, die beiden Endscheiben 28, einen Spannbolzen 29, eine Mutter 30 und eine Federscheibe 31. Die Federscheibe 31 gleicht elastisch die axiale Schrumpfung bei den Schweißvorgängen aus und verhindert dadurch Schweißfehler durch Klaffen bei den Schweißfugen.

Die Figur 16 zeigt eine Spannvorrichtung für die Innenschweißungen 51 an mehreren kupplungselementen, die jeweils wieder entsprechend Figur 1 aufgebaut sein können. Das Verspannen der Teile 1, 3 bzw. 2, 4 erfolgt hier unter Verwendung einer Anzahl gleicher, segmentähnlicher Abstandsringe 30 zwischen jeweils zusammengehörigen Membranscheiben 1, 2. Beim Verspannen wird wieder der Spannbolzen 29, die Mutter 30 und der Federring 31 verwendet, wobei die Federung zwischen den radial inneren Bereichen der Membranscheiben 1 und 2 durch die segmentartig aufgebauten Abstandsringe 30 verhindert wird. Die Abstandsringe 30 können nach dem Schweißen problemlos durch leichtes Dehnen der Doppelmembran demontiert werden. Die Anzahl der gleichzeitig in der Spannvorrichtung anzuordnenden Doppelmembranen (Figur 15) bzw. Kupplungselemente (Figur 16) ist abhängig von den Abmessungen der zur Verfügung stehenden Schweißmaschinenkammer. Bei mehr als zwei Kupplungselementen werden mittels der Schrauben 5 (Figur 1) jeweils die beiden Anschlußteile 4 verschraubt und zentriert.

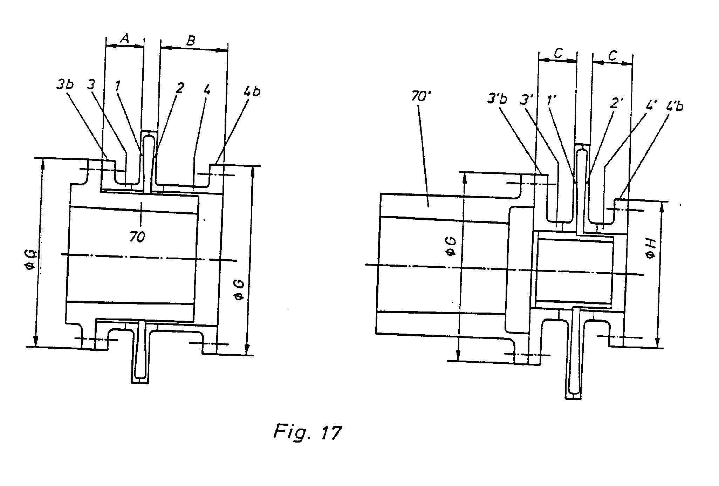

In Figur 17 erkennt man nebeneinander zwei Kupplungselemente 1, 2, 3, 4 bzw. 1', 2', 3', 4' mit Anschlußflanschen 3b, 4b bzw. 3'b, 4'b. in der linken Figur ist eine Nabe 70 eingebaut. In der rechten Figur ist eine Nabe 70' angebaut. Dies wird ermöglicht durch unterschiedliche Innendurchmesser. Die Außendurchmesser der Membranscheiben können gleich groß sein. In der linken Hälfte sind die Flanschdurchmesser G gleich. In der rechten Hälfte unterscheiden sich die Flanschdurchmesser G und H. In der linken Hälfte sind die Axialabstände der Flansche 3b und 4b, die mit A bzw. B bezeichnet sind, wieder so wie in Figur 1. In der rechten Hälfte sind die axialen Flanschabstände C einander gleich. Bei dem Kupplungselement mit kleinerem Innendurchmesser 1', 2', 2', 4' vergrößert sich vorteilhafterweise die Verformbarkeit durch den größeren flexiblen Scheibenbereich.

Zusammenfassend wird nachfolgend die große technische und wirtschaftliche Bedeutung der erfindungsgemäßen konstruktiven Ausbildung eines Kupplungselementes dargestellt. Das besondere der Erfindung besteht unter anderem darin, daß eine umfassende Optimierung durch ein einfaches und einheitliches Standard-Kupplungselement erreicht wird. Es kann ohne Veränderungen vielseitig eingesetzt werden. Die damit zu gewinnenden Übertragungssysteme erfüllen die hohen technischen Anforderungen in einem bisher noch nicht erreichten Ausmaß.

Die allseitige, stoffschlüssige Verbindung der Teile des Standard-elementes mittels Elektronenstrahlschweißung ergibt eine mit den bekannten lösbaren Verbindungsarten nicht erreichbare hohe Funktions- und Betriebssicherheit bei der Übertragung großer Drehmomente bei gleichzeitig höchsten Drehzahlen und Verformungen. Das Standard-Kupplungselement besitzt hinsichtlich der Drehmomentübertragung im gesamten, auf höchste Gestaltfestigkeit minimierten querschnitt eine vollkommene Werkstoffausnutzung; Querschnittsbereiche, die kein Drehmoment übertragen, sind nicht vorhanden. Infolge dieser konsequenten Leichtbauweise sind die Abmessungen und Wandstärken extrem klein und demzufolge auch die Masse und das Massenmoment.

Die erfindungscemäßen Kupplungselemente benötigen keine Wartung und erlauben Inspektionen in großen Zeitabständen.

Die Größenauslegung des Standard-Kupplungselementes und die beidseitige Anordnung von Flanschen mit minimierten, ungleichen Abständen zu der Doppelmembran ermöglichen die universelle Verwendbarkeit des Kupplungselementes innerhalb eines Baureihensystems sowie die Vielzahl von Bauformvarianten.

So kann das Standard-Kupplungselement unverändert verwendet werden bei angewachsenen Wellenflanschen, bei Wellennaben, die seitlich oder innerhalb des Kupplungselementes angeordnet sind, bei Wellennaben mit allen vorkommenden Welle/Nabe-Verbindungsarten und bei Zwischenwellen von unterschiedlicher Funktion und Abmessung.

Weitere Bauformen ergeben sich durch die separate, lösbare Anordnung des ringförmigen Einsatzes 14 (Fig. 5, 7, 9, 11, 12) in dem Anschlußteil 3 oder 4. Durch dieses Merkmal ist es möglich, den Einsatz 14 der jeweiligen Bauform entsprechend auszubilden, ohne das Standard-Kupplungselement zu verändern.

Sind weitere Ergänzungsteile wie z. B. 18, 19, 20, 22, 23, 24, 25 erforderlich, so können diese an den Flanschen des Standard-Kupplungselementes oder an den Wellennaben 13 angebracht werden.

Der Einsatz 14 erfüllt zusätzlich eine Sicherheitsfunktion, indem er bei einem Membranschaden das Lösen der zwischen den beiden Doppelmembranen angeordneten Teile verhindert. Durch die relativ kleinen Durchmesser der Einsätze 14 wird die Kupplungsmasse nur geringfügig vergrößert.

Alle diese Maßnahmen verändern bei der Bauformvariation nicht das Standard-Kupplungselement.

Die Standardisierung des Standard-Kupplungselementes reduziert auch drastisch die Herstellkosten: Es ist möglich, das Kupplungselement in verschiedenen, drehmomentabhängigen Baugrößen vorzufertigen und im Fertigzustand zu bevorraten. Bei der Vorfertigung kann das Schweißen gemäß den Figuren 15 und 16 an mehreren Elementen gleichzeitig erfolgen. Dadurch reduzieren sich die Rüstkosten sowie die Kosten für das Evakuieren der Schweißkammer und für die Wärmebehandlung nach dem Schweißen im Vakuumofen entsprechend der Anzahl der gleichzeitig vorzusehenden Elemente.

Die Bevorratung verringert auch beträchtlich die Lieferzeit für derartige Kupplungen, was gerade im Kupplungsbau sehr wichtig ist.

Das Standard-Kupplungselement erlaubt besonders große axiale und winklige Verformungen. Dieser wichtige Vorteil wird durch den Einsatz der Doppelmembran erreicht. Gegenüber dem Einmembrangelenk vergrößern sich die möglichen Verformungen auf das Doppelte und die Federsteifigkeit verringert sich auf die Hälfte.

Eine weitere Vergrößerung der Verformungsmöglichkeiten ergibt sich durch die hohe radiale Elastizität der inneren und äußeren Randbereiche der Doppelmembran. Diese Elastizitäten verkleinern die Membranbeanspruchungen bei Verformungen gegenüber den radial starren Ausführungen mit nur einer Membranscheibe.

Die dünnwandige Auslegung des inneren und äußeren Randbereiches vergrößert zudem die dazwischenliegende elastische Membranfläche. Dies führt zu einer noch größeren Verformbarkeit und nochmals zu kleineren Federsteifigkeiten.

Kleinere Federsteifigkeit reduziert letztlich die Rückstellkräfte auf die zu kunpelnden Wellen. Die besonders hohe Reduzierung dieser Kräfte durch Verwendung des erfindungsgemäßen Standard-Kupplungselements vergrößert ganz entscheidend den Vorteil dieser Kupplung gegenüber bekannten Membran- und Zahnkupplungen.

Das Standard-Kupplungselement erlaubt die Prüfung der Schweißverbindung auch nach Betriebszeiten mittels der bekannten zerstörungsfreien Prüfverfahren in einfacher Weise.

Das nachträgliche Ausärehen der Membranen 1, 2 und/oder der Hülsen 3a, 4a erlaubt zudem auch das Prüfen der Schweißverbindungen von innen aus. Es erhöht zusätzlich die Sicherheit der Schweißung an diesen besonders hoch beanspruchten Stellen, da die schadensanfällige Schweißwurzel dabei vollständig entfernt wird.

Das Standard-Kupplungselement erlaubt eine Komplettauswuchtung des montierten Wellenabschnitts entsprechend Figur 13. Die Auswuchtung kann weiter verbessert werden durch ein Starrsetzen der Doppelmembranen während des Auswuchtvorganges. Der durch Verspannen erzeugte Kupplungszustand entspricht dabei dem Zustand der eingebauten Kupplung bei Null-Ausrichtung der Wellen. Diese Maßnahme gewährleistet beste Laufpräzision und erlaubt höchste Drehzahlen als besonders wichtiger Vorteil dieser Kupplungskonstruktion.

Mittels Elastomer-Werkstoff im Innern des Standard-Kupplungselements kann eine Änderung der Steifigkeit und der Frequenz auch nachträglich erreicht werden. Das Füllen der Doppelmembran setzt voraus, daß eine Zugänglichkeit von innen her vorhanden ist. Die lösbare Verbindung des Einsatzes 14 ermöglicht dies. Elastomere wirken auf Schwingungen und Schall auch dämpfend und dämmend.

Die dargestellten Bauformvarianten stellen nur eine Auswahl der am häufigsten vorkommenden Ausführungen dar. Mit dem sich nicht ändernden Standard-Kupplungselement lassen sich noch eine Reihe weiterer Bauformen erzeugen, wie beispielsweise: drehelastische Bauformen mit Torsionswelle als Zwischenhülse; elektrisch isolierte Bauformen; Bauformen mit exakter Längeneinstellung durch Paß-Zwischenscheiben (z. B. vorgespannte Kunplungen); axial begrenzte Bauformen mit federnden Endlagen; Bauformen mit Sollbruchstelle zur Drehmomentbegrenzung; Bauformen mit Drehmoment-Schnelltrennung.

## Patentansprüche

1. Biegeelastisches Kupplungselement, bestehend aus zwei in ihrem radial äußeren Umfangsbereich miteinander verbundenen Membranscheiben (1,2) und mindestens einem an dem radial inneren Umfang einer dieser Membranscheiben (1,2) angeschweißten Anschlußteil (3,4), **dadurch gekennzeichnet,** daß im radial inneren Umfangsbereich gelegene, radial einwärts gerichtete Umfangsflächen des Anschlußteils (3,4) und der zugehörigen Membranscheibe (1,2) bündig aneinander anschließen und daß die radial äußere Verbindungszone der Membranscheiben und die radial innere Verbindungszone des Anschlußteils (3,4) und der zugehörigen Membranscheibe radial derart elastisch sind, daß bei einer Membranscheibendeformation durch Vergrößerung des axialen Abstands der Membranscheiben (1,2) in ihren radial inneren Umfangsbereichen eine elastische Durchmesserverkleinerung ΔR der radial äußeren Verbindungszone und eine elastische Durchmesservergrößerung Δr der radial inneren Verbindungszone eintreten kann.

2. Biegeelastisches Kupplungselement nach Anspruch 1, dadurch gekennzeichnet, daß im radial inneren Umfangsbereich gelegene, radial auswärts gerichtete Umfangsflächen des Anschlußteils (3, 4) und der zugehörigen Membranscheibe (1, 2) bündig aneinander anschließen.

3. Biegeelastisches Kupplungselement nach Anspruch 1 oder 2, dadurch gekennzeichnet, daß an jeder Membranscheibe (1, 2) im radial inneren Umfangsbereich je ein hülsenförmiges Anschlußteil (3a, 4a) anschließt, wobei diese Anschlußteile (3a, 4a) voneinander weg gerichtet sind.

4. Biegeelastisches Kupplungselement nach Anspruch 3, dadurch gekennzeichnet, daß die Anschlußteile (3a, 4a) an ihren voneinander abgelegenen Enden jeweils einen radial auswärts gerichteten Radialflansch (3b, 4b), insbesondere Schraubflansch, aufweisen.

5. Biegeelastisches Kupplungselement nach Anspruch 4, dadurch gekennzeichnet, daß die Radialflansche (3b, 4b) unterschiedliche axiale Abstände (M, S) von der jeweils zugehörigen Membranscheibe (1, 2) besitzen.

6. Biegeelastisches Kupplungselement nach Anspruch 5, dadurch gekennzeichnet, daß der eine in kürzerem axialen Abstand von der zugehörigen Membranscheibe (1) angeordnete Radialflansch (3b) einen solchen Axialabstand (M) von der zugehörigen Membranscheibe (1) besitzt, daß beim Anbringen von Verschraubungen (5) Verschraubungsmuttern zwischen diesen Radialflansch (3b) und die zugehörige Membranscheibe (1) eingebracht werden können und daß der andere, in größerem axialem Abstand (S) von der zugehörigen Membranscheibe (2) angeordnete Radialflansch (4b) einen solchen Axialabstand (S) von der zugehörigen Membranscheibe (2) besitzt, daß beim Anbringen von Verschraubungen (6) Schraubbolzen (6) zwischen diesen Radialflansch (4b) und die zugehörige Membranscheibe (2) eingebracht werden können.

7. Biegeelastisches Kupplungselement nach einem der Ansprüche 1 bis 6, dadurch gekennzeichnet, daß zwischen den beiden Membranscheiben (1, 2) zumindest in dem radial äußeren Umfangsbereich des zwischen ihnen eingeschlossenen Scheibenraums eine Füllmasse (60), insbesondere aus elastomerem Werkstoff, eingebaut ist.

8. Verfahren zur Herstellung eines biegeelastischen Kupplungselements nach einem der Ansprüche 1 bis 7, welches aus zwei in ihrem radial äußeren Umfangsbereich (D) miteinander verbundenen Membranscheiben (1,2) und mindestens einem an den radial inneren Umfang einer dieser Membranscheiben (1,2) angeschweißten Anschlußteil (3,4) besteht, wobei man das Anschlußteil (3,4) und die genannte eine Membranscheibe (1,2) im Schweißstoßbereich (51,52) mit zur gegenseitigen Anlage bestimmten entgegengesetzt radial gerichteten Zentrierflächen (2e,4f) und mit zur gegenseitigen Anlage bestimmten, entgegengesetzt axial gerichteten Kontaktflächen (2d,4c) ausbildet derart, daß die beiden Teile (2,4), nämlich das Anschlußteil (4) und die genannte eine Membranscheibe (2) in eine zentrierte und axial festgelegte Relativlage zusammengesteckt werden können (Figur 2a),wobei die Kontaktflächen (2d,4c) radial auswärts an die Zentrierflächen (2e,4f) anschließen und von radial außen her für eine Elektronenstrahlschweißung zugänglich sind, und wobei man nach dem Zusammenstecken im Kontaktbereich der Kontaktflächen (2d,4c) von radial außen her eine Elektronenstrahlschweißnaht (52) oder Laserschweißnaht erzeugt,
dadurch gekennzeichnet,
daß man die Elektronenstrahlschweißnaht bzw.Laserschweißnaht (52) radial einwärts bis mindestens zu den Zentrierflächen (2e,4f) erstreckt und daß man anschließend mindestens das radial einwärts der Zentrierflächen (2e,4f) liegende Material des einen (4) bzw. anderen Teils (2) abträgt.

9. Verfahren nach Anspruch 1,
dadurch gekennzeichnet,
daß man die Elektronenstrahlschweißnaht bzw. Laserschweißnaht (52) radial einwärts über die Zentrierflächen (2e,4f) hinaus in das Material des jeweiligen Teils (2,4) eindringen läßt.

10. Verfahren nach Anspruch 8 oder 9,
dadurch gekennzeichnet
daß man das Anschlußteil (4) mit einer nach radial auswärts und axial zu der genannten Membranscheibe (2) hin offenen, die anschlußteilseitige Kontaktfläche (4c) und die anschlußteilseitige Zentrierfläche (4f) bildenden Ringausnehmung (4d) versieht, welche nach radial einwärts durch einen in eine Bohrung der genannten Membranscheibe (2) einsteckbaren Ringvorsprung (4g) begrenzt ist, und daß man von dem Anschlußteil (4) nach dem Schweißen über die radiale Höhe des Ringvorsprungs (4g) von innen Material abträgt.

11. Verfahren nach einem der Ansprüche 8 bis 10,
dadurch gekennzeichnet,
daß man die beiden Membranscheiben (1,2) auch in ihren radial äußeren Membranbereichen miteinander durch Elektronenstrahloder Laserschweißung (50) verschweißt.

12. Verfahren nach einem der Ansprüche 8 bis 11,
dadurch gekennzeichnet,
daß man die Membranscheiben (1,2) an ihrem radial äußeren Umfang mit einer die Herstellung der Membranscheiben (1,2) erleichternden Materialstärke (Figur 2) herstellt und nach dem Verschweißen der Membranscheiben (1,2) die Materialstärke im radial äußeren Bereich der Membranscheiben (1,2) in einem die dortige Biegeweichheit vergrößernden Maße durch Materialabtragung reduziert.

13. Verfahren nach Anspruch 12, dadurch gekennzeichnet, daß man den Außendurchmesser ($D_o$) der Membranscheiben reduziert.

14. Verfahren nach einem der Ansprüche 12 und 13, dadurch gekennzeichnet, daß man den Übergang von der jeweiligen Außenumfangsfläche einer Membranscheibe (1, 2) zu der von der jeweils anderen Membranscheibe (2, 1) abgelegenen Stirnfläche (1b, 2b) der jeweiligen Membranscheibe (1, 2) an mindestens einer Membranscheibe (1, 2) abschrägt.

15. Verfahren nach einem der Ansprüche 8 bis 14, dadurch gekennzeichnet, daß man eine Verschweißung der beiden Membranscheiben (1, 2) vornimmt, bevor die Verschweißung mit dem Anschlußteil (3, 4) erfolgt.

16. Verfahren nach Anspruch 15, dadurch gekennzeichnet, daß man die Verschweißung der jeweils einen Membranscheibe (1, 2) mit dem zugehörigen Anschlußteil (3, 4) und insbesondere die Verschweißung der beiden Membranscheiben (1, 2) mit jeweils einem Anschlußteil (3, 4) unter Anpressung des jeweiligen Anschlußteils (3, 4) an die jeweilige Membranscheibe (1, 2) vornimmt, während man die beiden Membranscheiben (1, 2) an ihrem radial inneren Umfang gegeneinander durch Distanzstücke (30) abstützt, und daß man diese Distanzstücke (30) nach dem Anschweißen des Anschlußteils bzw. der Anschlußteile entnimmt.

17. Verfahren nach einem der Ansprüche 8 bis 16 dadurch gekennzeichnet, daß man nach dem Verbinden der Membranscheiben (1, 2) an ihrem radial äußeren Umfang und nach dem Anschließen eines Anschlußteils (3, 4) an mindestens eine der Membranscheiben (1, 2) in die eine Membranscheibe und/oder in deren zugehörigen Anschlußteil eine Überbrückungshülse (13,14) einbaut, welche den Spalt zwischen den beiden Membranscheiben (1, 2) überbrückt und dem Innenumfang der anderen Membranscheibe und-/oder dem Innenumfang des dieser letzteren zugehörigen Anschlußteils mit Abstand gegenüberliegt (Figuren 5 und 6).

18. Verfahren nach einem der Ansprüche 8 bis 17 dadurch gekennzeichnet, daß man ein Kupplungselement mit je einem Anschlußteil (3, 4) an beiden Membranscheiben (1, 2) herstellt, wobei jedes dieser Anschlußteile (3, 4) aus einer axial gerichteten Anschlußhülse (3a, 4a) und einem am membranscheibenfernen Ende der Anschlußhülse (3a, 4a) radial auswärts gerichteten Anschlußflansch (3b, 4b), insbesondere Verschraubungsflansch besteht.

19. Verfahren nach Anspruch 18 dadurch gekennzeichnet, daß man von den beiden Anschlußelementen (3, 4) das eine Anschlußelement (3) mit kleinstmöglichem Flanschabstand (M) von der zugehörigen Membranscheibe (1) herstellt, der den Einbau einer Mutter auf einen zu der jeweiligen Membranscheibe (1) hin axial eingeführten Schraubbolzen (5) gestattet, und daß man das andere Anschlußelement (4) mit einem Flanschabstand (S) von der zugehörigen Membranscheibe (2) ausführt, welcher das Einsetzen eines Schraubbolzens (6) in axialer Richtung von dem Ringraum zwischen dem jeweiligen Flansch (4b) und der jeweiligen Membranscheibe (2) aus gestattet.

20. Verfahren nach Anspruch 18 oder 19, dadurch gekennzeichnet, daß man Anschlußelemente mit Schraubflanschen von unterschiedlichem Durchmesser verwendet.

21. Verfahren nach einem der Ansprüche 18 bis 20 dadurch gekennzeichnet, daß man unter Zugrundelegung gleichen Membranscheibenaußendurchmessers Kupplungselemente mit unterschiedlichem Membranscheibeninnendurchmesser herstellt, wobei die Ausführungsform mit größerem Membranscheibeninnendurchmesser zur Aufnahme einer Anschlußnabe (70) innerhalb des Kupplungselements bestimmt ist.

22. Biegeelastisches Kupplungselement mit mindestens zwei an ihrem radial äußeren Rand miteinander verbundenen Membranscheiben (1, 2), nach einem der Ansprüche 1 bis 7, dadurch gekennzeichnet, daß der Zwischenraum zwischen den beiden Membranscheiben (1, 2) wenigstens in seinem radial äußeren Bereich mit einer federnden und/oder dämpfenden und/oder verformungsbeeinflussenden Füllmasse (60), insbesondere einer Elastomermasse (60) gefüllt ist.

**Claims**

1. A flexurally resilient coupling element which consists of two membrane discs (1, 2) connected to each other in their radially outer peripheral zone and at least one connecting part (3, 4) welded onto the radially inner periphery of one of these membrane discs (1, 2), characterised in that radially inwardly directed peripheral surfaces on the connection part (3, 4) and on the associated membrane disc (1, 2) which are disposed in the radially inner peripheral zone are closely adjacent one another, and in that the radially outer connecting zone of the membrane discs and the radially inner connecting zone of the connection part (3, 4) and of the associated disc are so radially resilient that in the event of a deformation of the membrane discs due to an increase in the axial gap between the membrane discs (1, 2) in their radially inner peripheral zones there can be a resilient reduction $\Delta R$ in diameter of the radially outer connecting zone and a resilient increase $\Delta r$ in the diameter of the radially inner connecting zone.

2. A flexurally resistant coupling element according to claim 1, characterised in that radially outwardly directed peripheral surfaces of the connection part (3, 4) and of the associated membrane disc (1, 2) which are situated in the radially inner peripheral zone are flush with and adjacent one another.

3. A flexurally resilient coupling element according to claim 1 or 2, characterised in that there is adjacent each membrane disc (12) in a radially inner peripheral zone a sleeve-shaped connection member (3a, 4a), said connection members (3a, 4a) being directed away from one another.

4. A flexurally resistant coupling element according to claim 3, characterised in that at their ends which are remote from each other the connection parts (3a, 4a) have a radially outwardly directed radial flange (3b, 4b), particularly a screwed flange.

5. A flexurally resilient coupling element according to claim 4, characterised in that the radial flanges (3b, 4b) are at different axial distances (M, S) from the relevantly associated membrane disc (1, 2).

6. A flexurally resilient coupling element according to claim 5, characterised in that the radial flange (3b) disposed at a lesser axial distance from the associated membrane disc (1) is at such an axial distance (M) from the associated membrane disc (1) that when screwed joints (5) are applied, nuts can be fitted between this radial flange (3b) and the associated membrane disc (1) and in that the other radial flange (4b) which is at a greater axial distance (S) from the associated membrane disc (2) is at such an axial distance (S) from the associated membrane disc (2) that when screwed joints (6) are provided, screw bolts (6) can be fitted between this radial flange (4b) and the associated membrane disc (2).

7. A flexurally resilient coupling element according to one of claims 1 to 6, characterised in that a filling composition (60) consisting particularly of an elastomeric material is provided between the two membrane discs (1, 2), at least in the radially outer peripheral zone of the disc space enclosed between them.

8. A method of producing a flexurally resilient coupling element according to one of claims 1 to 7 which consists of two membrane discs (1, 2) connected to each other in their radially outer peripheral zone (d) and at least one connecting part (3, 4) welded onto the radially inner periphery of one of these membrane discs (1, 2), characterised in that the connection part (3, 4) and the said one membrane disc (1, 2) is constructed in the welded joint area (51, 52) with oppositely radially directed centring surfaces (2e, 4f) which are intended to bear on one another and with oppositely axially directed contact surfaces (2d, 4c) intended to bear on each other so that the two parts (2, 4) namely the connection part (4) and the said one membrane disc (2) can be fitted together in a centred and axially established relative position (Fig. 2a), the contact surfaces (2d, 4c) being radially outwardly adjacent the centring surfaces (2e, 4f) and being accessible from radially outside for electron-beam welding (52) and in that after the parts are fitted together, in the contact zone of the contact surfaces (2d, 4c), an electron-beam weld (52) or laser welded seam is produced in the contact area of the contact surfaces (2d, 4c) from radially outside, characterised in that the electron-beam weld or laser weld seam (52) is extended radially inwardly at least as far as the centring surfaces (2e, 4f) and in that then at least the material disposed inwardly on the centring surfaces (2e, 4f) is removed from the one (4) or other part (2).

9. A method according to claim 1, characterised in that the electron-beam weld or laser weld seam (52) is allowed to penetrate radially inwardly beyond the centring surfaces (2e, 4f) into the material of the relevant part (2, 4).

10. A method according to claim 8 or 9, characterised in that the connection part (4) is provided with a radially outwardly annular recess (4d) which is open axially towards the said membrane disc (2) and which forms the contact surface (4c) on the connection part side and the centring surface (4f) on the connection part side, the annular recess (4d) being defined radially inwardly by an annular projection (4g) which can be fitted into a bore in the said membrane disc (2), and in that after welding over the radial height of the annular projection (4g), material is removed from the inside of the connection part (4).

11. A method according to one of claims 8 to 10, characterised in that also the radially outer portions of the two membrane discs (1, 2) are welded together by electron-beam or laser welding (50).

12. A method according to one of claims 8 to 11, characterised in that on their radially outer periphery the membrane discs (1, 2) are produced to a thickness of material (Fig. 2) which facilitates production of the membrane discs (1, 2) and after welding of the membrane discs (1, 2), the thickness of the material is reduced in the radially outer portion of the membrane discs (1, 2) by the removal of material to a degree which increases the flexural softness at that point.

13. A method according to claim 12, characterised in that the outside diameter ($D_o$) of the membrane discs is reduced.

14. A method according to one of claims 12 and 13, characterised in that the transition from the relevant outer peripheral surface of one membrane disc (1, 2) to the end face (1b, 2b) of the relevant membrane disc (1, 2) which is remote from whichever is the other membrane disc (2, 1), is chamfered on at least one membrane disc (1, 2).

15. A method according to one of claims 8 to 14, characterised in that the two membrane discs (1, 2) are welded together before the weld to the connection part (3, 4) is made.

16. A method according to claim 15, characterised in that welding of in each case one membrane disc (1, 2) to the associated connection part (3, 4) and particularly the welding of the two membrane discs (1, 2) to in each case one connection part (3, 4) is undertaken while pressing the relevant connection part (3, 4) against the relevant membrane disc (1, 2) while the two membrane discs (1, 2) are braced against each other on their radially inner periphery through spacers (30) and in that the said spacers (30) are removed after welding-on of the connection part or parts.

17. A method according to one of claims 8 to 16, characterised in that after the membrane discs (1, 2) are connected at their radially outer periphery and after the connection of a connection part (3, 4) to at least one of the membrane discs (1, 2) a bridging sleeve (13, 14) is incorporated into one membrane disc and/or into its associated connection part to bridge the gap between the two membrane discs (1, 2), being disposed opposite and at a distance from the inner periphery of the other membrane disc and/or the inner periphery of the connection part associated with this latter (Figs. 5 and 6).

18. A method according to one of claims 8 to 17, characterised in that a coupling element is produced with one connection part (3, 4) on each of the two membrane discs (1, 2), each of these connection parts (3, 4) consisting of an axially directed connection sleeve (3a, 4a) and, directed radially outwardly at that end of the connection sleeve (3a, 4a) which is remote from the membrane disc, a connection flange (3b, 4b), particularly a screwed flange.

19. A method according to claim 18, characterised in that of the two connection elements (3, 4), one connection element (3) is produced the smallest possible flange distance (M) from the associated membrane disc (1) which allows incorporation of a nut on a screw bolt (5) inserted axially towards the relevant membrane disc (1) and in that the other connection element (4) is constructed with a flange space (S) from the associated membrane disc (2) which allows the insertion of a screw bolt (6) in an axial direction from the annular space between the relevant flange (4b) and the relevant membrane disc (2).

20. A method according to claim 18 or 19, characterised in that connection elements are used which have screw flanges of different diameters.

21. A method according to one of claims 18 to 20, characterised in that on a basis of the same membrane disc outside diameter coupling elements are produced which have different membrane disc inside diameters, the embodiment which has the larger membrane disc inside diameter being intended to accommodate a connection hub (70) within the coupling element.

22. A flexurally resilient coupling element with, connected to each other at their radially outer edge, at least two membrane discs (1, 2) particularly according to one of claims 1 to 7, characterised in that the intermediate space between the two membrane discs (1, 2) is at least in its radially outer portion filled with a resilient and/or damping and/or deformation-influencing filling composition (60), particularly an elastomeric composition (60).

**Revendications**

1. Elément d'accouplement élastique en flexion, composé de deux disques de membrane (1, 2) reliés entre eux dans leur secteur périphérique extérieur radialement et d'au moins une pièce de raccordement (3, 4) soudée sur la périphérie intérieure radialement de l'un de ces disques de membrane (1, 2), caractérisé en ce que des surfaces périphériques de la pièce de raccordement (3, 4) et du disque de membrane (1, 2) correspondant, situées dans le secteur périphérique intérieur radialement et orientées vers l'intérieur radialement sont raccordées l'une à l'autre de niveau et en ce que la zone de liaison extérieure radialement des disques de membrane et la zone de liaison intérieure radialement de la pièce de raccordement (3, 4) et du disque de membrane correspondant sont élastiques radialement, de telle sorte que lors d'une déformation du disque de membrane par l'accroissement de l'écart axial des disques de membrane (1, 2) dans leurs secteurs périphériques intérieurs radialement, il puisse se produire une réduction élastique $\Delta R$ du diamètre de la zone de liaison extérieure radialement et une augmentation élastique $\Delta r$ du diamètre de la zone de liaison intérieure radialement.

2. Elément d'accouplement élastique en flexion selon la revendication 1, caractérisé en ce que des surfaces périphériques de la pièce de raccordement (3, 4) et du disque de membrane (1, 2) correspondant, situées dans le secteur périphérique intérieur radialement et orientées vers l'extérieur radialement, se raccordent l'une à l'autre de niveau.

3. Elément d'accouplement élastique en flexion selon la revendication 1 ou 2, caractérisé en ce qu'une pièce de raccordement (3a, 4a) en forme de manchon se raccorde sur chaque disque de membrane (1, 2) dans le secteur périphérique intérieur radialement, ces pièces de raccordement (3a, 4a) étant orientées à l'opposé l'une de l'autre.

4. Elément d'accouplement élastique en flexion selon la revendication 3, caractérisé en ce que les pièces de raccordement (3a, 4a) présentent chacune à leurs extrémités éloignées l'une de l'autre une bride radiale (3b, 4b), en particulier une bride de vissage, orientée vers l'extérieur radialement.

5. Elément d'accouplement élastique en flexion selon la revendication 4, caractérisé en ce que les brides radiales (3b, 4b) présentent par rapport au disque de membrane (1, 2) correspondant à chacune, des écarts axiaux (M, S) différents.

6. Elément d'accouplement élastique en flexion selon la revendication 5, caractérisé en ce que la bride radiale (3b) disposée avec l'écart axial le plus court par rapport au disque de membrane (1) correspondant présente un écart axial (M) par rapport au disque de membrane (1) correspondant tel que, lors de l'application de vissages (5), des écrous filetés puissent être introduits entre cette bride radiale (3b) et le disque de membrane (1) correspondant, et en ce que l'autre bride radiale (4b) disposée avec l'écart axial (S) le plus grand par rapport au disque de membrane (2) correspondant présente un écart axial (S) par rapport au disque de membrane (2) correspondant tel que, lors de l'application de vissages (6), des boulons filetés (6) puissent être introduits entre cette bride radiale (4b) et le disque de membrane (2) correspondant.

7. Elément d'accouplement élastique en flexion selon l'une quelconque des revendications 1 à 6, caractérisé en ce qu'une masse de remplissage (60), en particulier en matériau élastomère, est intégrée entre les deux disques de membrane (1, 2) au moins dans le secteur périphérique ' extérieur radialement de l'espace en forme de disque délimité entre eux.

8. Procédé pour la fabrication d'un élément d'accouplement élastique en flexion selon l'une quelconque des revendications 1 à 7, qui se compose de deux disques de membrane (1, 2) reliés entre eux dans leur secteur périphérique extérieur radialement (D) et d'au moins une pièce de raccordement (3, 4) soudée sur la périphérie intérieure radialement de l'un de ces disques de membrane (1, 2), dans lequel la pièce de raccordement (3, 4) et ledit disque de membrane (1, 2) sont formés dans le secteur du joint soudé (51, 52) avec des surfaces de centrage (2e, 4f) orientées à l'opposé radialement et destinées à un appui mutuel, et avec des surfaces de contact (2d, 4c) orientées à l'opposé axialement et destinées à 'un appui mutuel, de telle sorte que les deux pièces (2, 4), c'est-à-dire la pièce de raccordement (4) et ledit disque de membrane (2), puissent être réunies dans une position relative centrée et fixée axialement (Figure 2a), les surfaces de contact (2d, 4c) se raccordant vers l'extérieur radialement sur les surfaces de centrage (2e, 4f) et étant accessibles de l'extérieur radialement en vue d'un soudage par bombardement électronique, et une soudure (52) par bombardement électronique ou par laser étant produite de l'extérieur après l'assemblage dans le secteur de contact des surfaces de contact (2d, 4c), caractérisé en ce que le joint de soudure par bombardement électronique ou par laser (52) s'étend radialement vers l'intérieur au moins jusqu'aux surfaces de centrage (2e, 4f), et en ce que le matériau situé au moins à l'intérieur radialement des surfaces de centrage (2e, 4f) de l'une (4) ou l'autre pièce (2) est ensuite enlevé.

9. Procédé selon la revendication 1, caractérisé en ce que le joint de soudure (52) par bombardement électronique ou par laser pénètre radialement vers l'intérieur au-delà des surfaces de centrage (2e, 4f) dans le matériau de chaque pièce (2, 4).

10. Procédé selon la revendication 8 ou 9, caractérisé en ce que la pièce de raccordement (4) est pourvue d'un évidement annulaire (4d) ouvert radialement vers l'extérieur et axialement vers ledit disque de membrane (2) et formant la surface de contact (4c) du côté de la pièce de raccordement et la surface de centrage (4f) du côté de la pièce de raccordement, lequel est délimité vers l'intérieur radialement par une saillie annulaire (4g) pouvant être introduite dans un trou dudit disque de membrane (2), et en ce qu'après le soudage du matériau est enlevé de la pièce de raccordement (4) à partir de l'intérieur sur la hauteur radiale de la saillie annulaire (4g).

11. Procédé selon l'une quelconque des revendications 8 à 10, caractérisé en ce que les deux disques de membrane (1, 2) sont également soudés ensemble dans leurs secteurs de membrane extérieurs radialement par une soudure (50) par bombardement électronique ou par laser.

12. Procédé selon l'une quelconque des revendications 8 à 11, caractérisé en ce que les disques de membrane (1, 2) sont fabriqués avec une épaisseur de matériau facilitant la fabrication des disques de membrane (1, 2) sur leur périphérie extérieure radialement (Figure 2), et l'épaisseur de matériau est réduite par enlèvement de matériau après le soudage des disques de membrane (1, 2) dans le secteur extérieur radialement des disques de membrane (1, 2), dans une mesure accroissant la souplesse en flexion à cet endroit.

13. Procédé selon la revendication 12, caractérisé en ce que le diamètre extérieur ($D_o$) des disques de membrane est réduit.

**14.** Procédé selon l'une quelconque des revendications 12 et 13, caractérisé en ce que la transition entre la surface périphérique extérieure de chaque disque de membrane (1, 2) et la face (1b, 2b) de chaque disque de membrane (1, 2) éloignée de l'autre disque de membrane (2, 1) est biseautée en direction d'au moins un disque de membrane (1, 2).

**15.** Procédé selon l'une quelconque des revendications 8 à 14, caractérisé en ce qu'un soudage des deux disques de membrane (1, 2) est réalisé avant le soudage avec la pièce de raccordement (3, 4).

**16.** Procédé selon la revendication 15, caractérisé en ce que le soudage de chacun des disques de membrane (1, 2) avec la pièce de raccordement (3, 4) correspondante, en particulier le soudage des deux disques de membrane (1, 2) avec l'une des pièces de raccordement (3, 4), est réalisé en pressant chaque pièce de raccordement (3, 4) sur le disque de membrane (1, 2) correspondant, tout en appuyant les deux disques de membrane (1, 2) l'un contre l'autre sur leur périphérie intérieure à l'aide de pièces d'écartement (30), et en ce que ces pièces d'écartement (30) sont retirées après le soudage de la pièce de raccordement ou des pièces de raccordement.

**17.** Procédé selon l'une quelconque des revendications 8 à 16, caractérisé en ce qu'après la liaison des disques de membrane (1, 2) sur leur périphérie extérieure radialement et après le raccordement d'une pièce de raccordement (3, 4) sur au moins un des disques de membrane (1, 2), un manchon de franchissement (13, 14) est intégré dans l'un des disques de membrane et/ou dans la pièce de raccordement lui correspondant, lequel franchit la fente entre les deux disques de membrane (1, 2) et fait face à la périphérie intérieure de l'autre disque de membrane et/ou à la périphérie intérieure de la pièce de raccordement correspondant à ce dernier à une certaine distance (Figures 5 et 6).

**18.** Procédé selon l'une quelconque des revendications 8 à 17, caractérisé en ce qu'un élément d'accouplement est fabriqué avec une pièce de raccordement (3, 4) sur les deux disques de membrane (1, 2), chacune de ces pièces de raccordement (3, 4) se composant d'un manchon de raccordement (3a, 4a) orienté axialement et d'une bride de raccordement (3b, 4b), en particulier une bride de vissage, orientée vers l'extérieur radialement à l'extrémité du manchon de raccordement (3a, 4a) éloignée du disque de membrane.

**19.** Procédé selon la revendication 18, caractérisé en ce que l'un (3) des deux éléments de raccordement (3, 4) est fabriqué avec un écart de bride (M) aussi petit que possible par rapport au disque de membrane (1) correspondant, qui permet l'introduction d'un écrou sur un boulon fileté (5) introduit axialement en direction du disque de membrane (1) correspondant, et en ce que l'autre élément de raccordement (4) est réalisé avec un écart de bride (S) par rapport au disque de membrane (2) correspondant qui permet l'introduction d'un boulon fileté (5) dans le sens axial à partir de l'espace annulaire entre la bride (4b) et le disque de membrane (2).

**20.** Procédé selon la revendication 18 ou 19, caractérisé en ce que des éléments de raccordement avec des brides de vissage de diamètre différent sont utilisés.

**21.** Procédé selon l'une quelconque des revendications 18 à 20, caractérisé en ce que sur la base d'un même diamètre extérieur de disque de membrane, des éléments d'accouplement de diamètre intérieur de disque de membrane différent sont fabriqués, le mode de réalisation avec le plus grand diamètre intérieur de disque de membrane étant destiné à recevoir un moyeu de raccordement (70) à l'intérieur de l'élément d'accouplement.

**22.** Elément d'accouplement élastique en flexion avec au moins deux disques de membrane (1, 2) reliés entre eux sur leur bord extérieur radialement selon l'une quelconque des revendications 1 à 7, caractérisé en ce que l'espace compris entre les deux disques de membrane (1, 2) est rempli, au moins dans son secteur extérieur radialement, d'une masse de remplissage (60) élastique et/ou amortissante et/ou influençant la déformation, en particulier une masse d'élastomère (60).

Fig. 1

Fig. 2

Fig. 2a

Fig. 3

Fig. 4

16

EP 0 462 991 B1

Fig. 5

Fig. 6

Fig. 7

Fig. 8

17

Fig. 9

Fig. 10

Fig. 11

Fig. 12

Fig. 13

Fig. 14

18

Fig. 15

Fig. 16

Fig. 17